# EUROPEAN PATENT SPECIFICATION

(11) **EP 3 413 041 B1**
(45) Date of publication and mention of the grant of the patent: **22.05.2024**
(21) Application number: 18176432.5
(22) Date of filing: 07.06.2018
(51) Int. Cl.: G01N 29/24

(54) **SENSOR SYSTEM**
SENSORSYSTEM
SYSTEME COMPRENANT UN CAPTEUR

(30) Priority: 09.06.2017 JP 2017113939
(43) Date of publication of application: 12.12.2018
(73) Proprietor: HITACHI-GE NUCLEAR ENERGY, LTD., Hitachi-shi Ibaraki 317-0073 (JP)
(72) Inventor: TAMURA, Akinori, Chiyoda-ku, Tokyo 1008280 (JP); KOUNO, Naoyuki, Chiyoda-ku, Tokyo 1008280 (JP); MATSUI, Tetsuya, Chiyoda-ku, Tokyo 1008280 (JP)
(74) Representative: Mewburn Ellis LLP

(56) References cited:
- CN-U- 201 661 393
- JP-A- 2005 231 983
- DAVID W GREVE ET AL: "An Inductively Coupled Lamb Wave Transducer", IEEE SENSORS JOURNAL, IEEE SERVICE CENTER, NEW YORK, NY, US, vol. 7, no. 2, 1 February 2007 (2007-02-01), pages 295-301, XP011157463, ISSN: 1530-437X, DOI: 10.1109/JSEN.2006.886904

## Description

### BACKGROUND OF THE INVENTION

### 1. Field of the Invention

The present invention relates to a structure of a lagging material.

### 2. Description of the Related Art

JP2005231983A discloses a method and apparatus for highly purifying a glass body.

CN201661393U discloses a far-infared magnetic spiral fuel economizer.

DAVID W GREEN ET AL disclose: "An Inductively Coupled Lamb Wave Transducer", IEEE SENSORS JOURNAL, IEE SERVICE CENTER, NEW YORK, NY, US, vol. 7, no. 2, 1 February 2007 (2007-02-01), pages 295-301, XP011157463.

A non-destructive inspection technology is a technology with which it is possible to inspect a state of an object without breaking the object. Specifically, a non-destructive inspection using an ultrasonic wave is widely used in various fields because of reasons such as a low cost, application easiness, and the like.

A crack inspection or thickness inspection with an ultrasonic wave is periodically performed in a nuclear plant or a thermal power plant in order to secure health of a pipe, a container, or the like. Most of pipes or containers are covered with a lagging material. Thus, for an ultrasonic inspection, it is necessary to remove the lagging material first, to manually press an ultrasonic probe to a predetermined inspection point and perform inspection, and then to recover the lagging material. Also, when an inspection position is at a height, scaffolding assembling is necessary before and after the inspection.

Specifically, in a nuclear plant, it is prescribed to inspect many pipes and containers in each periodic inspection, and a lot of work and time are used. Also, in the above-described manual inspection, a signal received in an ultrasonic probe varies according to a pressing angle or the like of the ultrasonic probe. Thus, it is necessary to carefully control the ultrasonic probe at each inspection point.

In Nobuo Yamaga, et al. "Thickness Measuring Technology for Pipes of Thermal Power Plants," Toshiba Review, Vol. 63, No. 4, p. 41-44, an inspection method by an ultrasonic optical probe in which an electromagnetic ultrasonic oscillator and an optical fiber sensor are combined is described. A resonant wave of an ultrasonic wave excited by the electromagnetic ultrasonic oscillator is detected by an optical fiber sensor. By previously providing the electromagnetic ultrasonic oscillator and the optical fiber sensor at an inspection point under a lagging material, it is possible to perform an ultrasonic inspection of a pipe without a removal of the lagging material. However, since a power wire or a signal wire is extracted from each of the electromagnetic ultrasonic oscillator and the optical fiber sensor, many wiring wires are necessary and a risk of disconnection is increased. Also, in a case where a crack or thinning is detected in a pipe by the present sensor, a removal of a lagging material and transition to a manual detailed inspection are necessary. However, since a power wire or a signal wire of the present sensor is extracted to the outside through the lagging material, it is necessary to cut the power wire or the signal wire to remove the lagging material, and there is a problem that it also becomes impossible to use a sensor in a part where the detailed inspection is not necessary.

In order to solve such a problem, there is a method of previously attaching an ultrasonic sensor including a battery and a control radio wave transceiver to an inspection point (Shinae Jang, et al. "Structural health monitoring of a cable-stayed bridge using smart sensor technology: Deployment and evaluation," Smart Structures and Systems, Vol. 6, No. 5-6, p. 439-459, and Frederic Cegla, et al. (2015) "Ultrasonic monitoring of pipeline wall thickness with autonomous, wireless sensor networks," Oil and Gas Pipelines: Integrity and Safety Handbook). By arrangement of a control server and a control radio wave transmitter in a plant, it is possible to control each ultrasonic sensor from the control server during inspection and to automatically perform an ultrasonic inspection at each inspection point. By previously attaching an ultrasonic sensor under a lagging material, it becomes possible to perform an ultrasonic inspection of a pipe or a container without a removal of the lagging material. However, in the present method, it is necessary to attach a battery and a control radio wave transceiver to an ultrasonic sensor, and periodic maintenance such as battery replacement becomes necessary. Moreover, there is a problem that a sensor itself becomes large.

In British Patent No. 2523266, and Cheng Huan Zhon, et al. "Investigation of Inductively Coupled Ultrasonic Transducer System for NDE," IEEE transactions on ultrasonics, Vol. 60, No. 6, p. 1115-1125, a method of performing a contactless ultrasonic inspection by using electromagnetic induction between coils is described. In the present method, a sensor, and a sensor coil connected to the sensor are previously provided in an inspection object, information is exchanged between the sensor coil and a sensor prove, which includes a transmission coil and a reception coil, through a magnetic field generated by electromagnetic induction from the sensor prove, and a signal acquired in the sensor is read. A contactless ultrasonic inspection can be performed. In the present method, a sensor unit only includes the sensor and the sensor coil, and a battery is not necessary. Since the sensor unit becomes maintenance-free, this is a prospective technology.

### SUMMARY OF THE INVENTION

In a nuclear plant, a periodic inspection of many pipes and containers is required. Specifically, in a pipe thinning inspection, an inspection method recommended by Japan Society of Mechanical Engineers is set and this requires that a measurement pitch on a surface of a pipe is 100 mm or narrower. Since many sensors are attached to a surface of a pipe according to the present standard, it is important that the sensors themselves are maintenance-free and compact.

Compared to inspection methods disclosed in Nobuo Yamaga, et al. "Thickness Measuring Technology for Pipes of Thermal Power Plants," Toshiba Review, Vol. 63, No. 4, p. 41-44, Shinae Jang, et al. "Structural health monitoring of a cable-stayed bridge using smart sensor technology: Deployment and evaluation," Smart Structures and Systems, Vol. 6, No. 5-6, p. 439-459, and Frederic Cegla, et al. (2015) "Ultrasonic monitoring of pipeline wall thickness with autonomous, wireless sensor networks," Oil and Gas Pipelines: Integrity and Safety Handbook, an inspection method of using electromagnetic induction between coils which method is described in each of British Patent No. 2523266, and Cheng Huan Zhon, et al. "Investigation of Inductively Coupled Ultrasonic Transducer System for NDE," IEEE transactions on ultrasonics, Vol. 60, No. 6, p. 1115-1125 is considered to be effective since a sensor unit is maintenance-free and compact.

However, in the method described in each of British Patent No. 2523266, and Cheng Huan Zhon, et al. "Investigation of Inductively Coupled Ultrasonic Transducer System for NDE," IEEE transactions on ultrasonics, Vol. 60, No. 6, p. 1115-1125, it is necessary to use a sensor coil having an outer diameter that is substantially equal to a distance between the sensor coil and a sensor prove in order to acquire sufficient information transmission by electromagnetic induction. On the other hand, since a measurement pitch of pipe thinning is previously prescribed as described above, there is a limit in a size of a usable sensor coil. Thus, there is a problem that sufficient signal transmission cannot be performed in a case where a pipe or a container to which a lagging material having a thickness equal to or thicker than an outer diameter of a used sensor coil is provided is measured.

Also, in a case where a measurement pitch is narrow, in the method described in each of British Patent No. 2523266, and Cheng Huan Zhon, et al. "Investigation of Inductively Coupled Ultrasonic Transducer System for NDE," IEEE transactions on ultrasonics, Vol. 60, No. 6, p. 1115-1125, a signal is also received from an adjacent sensor coil when inspection is performed above a lagging material by a sensor prove. Thus, there is a problem of signal interference.

The present invention is provided in view of the forgoing and is to provide a technology of enabling signal transmission between a sensor coil and a sensor prove in a case where a contactless ultrasonic inspection of a pipe or a container covered with a lagging material having a thickness equal to or thicker than an outer diameter of the sensor coil is performed.

Particulars of the present invention are set out in claim 1. The dependent claims set out preferred features. In the present invention, a member that converges a magnetic field line in a lagging material that covers a periphery of a structure that becomes hot is provided in the lagging material to solve the above problems.

According to the present invention, even on an inspection object including a lagging material having a thickness equal to or thicker than an outer diameter of a sensor coil, an ultrasonic inspection can be performed without a removal of the lagging material.

### BRIEF DESCRIPTION OF THE DRAWINGS

Fig. 1 is a sectional view illustrating a configuration of a sensor system according to a first embodiment;
Fig. 2 is a view for describing an operation principal of a sensor system in a technology in a related art;
Fig. 3 is a view for describing an operation principal of a sensor system in the present embodiment;
Figs. 4A to 4C are views for comparison between a received waveform acquired by a publicly known technology and a received waveform acquired by the present embodiment;
Fig. 5 is a view illustrating a configuration of a sensor system according to a second embodiment;
Fig. 6 is a view illustrating a method of embedding the sensor system according to the second embodiment into a lagging material;
Fig. 7 is a view illustrating a configuration of a sensor system according to a third embodiment;
Fig. 8 is a view illustrating a configuration of a sensor system according to a fourth embodiment;
Fig. 9 is a view illustrating a configuration of a sensor system according to a fifth embodiment; and
Fig. 10 is a view illustrating the configuration of the sensor system according to the fifth embodiment from a side of a sensor prove.

### DESCRIPTION OF THE PREFERRED EMBODIMENTS

In the following, embodiments of the present invention will be described with reference to the drawings.

### First Embodiment

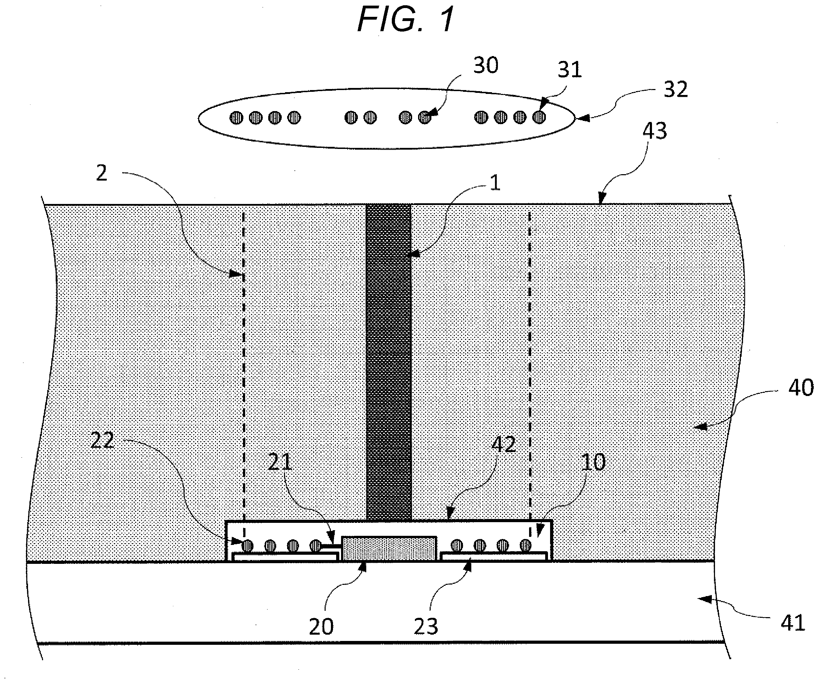

Fig. 1 is a sectional view illustrating a configuration of a sensor system according to the first embodiment.

A sensor system of the present embodiment includes a sensor 20 pasted on a surface of an inspection object 41, a sensor coil 22 that is electrically connected to the sensor 20 through a cable 21, an electromagnetic wave blocking sheet 23 arranged between the sensor coil and the inspection object 41, a sensor prove 32 including a transmission coil 31 and a reception coil 30, and a magnetic flux convergence structure 1 arranged in a lagging material 40 that covers the inspection object 41. A notch part 10 that is a space in which the sensor 20 and the sensor coil 22 are arranged is provided in the lagging material.

The inspection object 41 in the present embodiment is a metallic plate formed of carbon steel or stainless steel, and corresponds to a pipe or a container with high curvature in a plant inspection. Since becoming hot during plant operation, the inspection object 41 is covered with the lagging material 40 formed of calcium silicate (or rock wool, glass wool, amorphous substance kneaded with water, or rigid urethane foam). The transmission coil 31 and the reception coil 30 of the sensor prove 32 are connected to a pulsar/receiver used for a normal ultrasonic inspection (not illustrated) and a PC having an oscilloscope function (not illustrated).

The magnetic flux convergence structure 1 arranged in the lagging material 40 includes a magnetic body (such as ferrite) having high magnetic permeability and relatively low thermal conductivity and has a bar shape penetrating a lagging material inner surface 42 and a lagging material outer surface 43. A shape of a cross section of the magnetic flux convergence structure 1 is not limited and may be a circle or a quadrangle. A part of the magnetic flux convergence structure 1 is arranged in such a manner as to be included in a region in a vertical direction 2 of the sensor coil 22 arranged on the inspection object 41. An outer diameter of the magnetic flux convergence structure 1 is at least 1/10 of an outer diameter of the sensor coil 22 or larger.

Each of the transmission coil 31, the reception coil 30, and the sensor coil 22 is, for example, a flat coil formed of a 0.05 mm copper wire. A size and the number of turns are determined, for example, by the method described in Cheng Huan Zhon, et al. "Investigation of Inductively Coupled Ultrasonic Transducer System for NDE," IEEE transactions on ultrasonics, Vol. 60, No. 6, p. 1115-1125.

As a coil outer diameter becomes large, a signal to noise ratio (SN ratio) of a signal received in the receiver is improved. However, as described above, a measurement pitch of 100 mm or narrower is required in a pipe thinning inspection. Thus, an outer diameter of the sensor coil 22 is 30 mm in the present embodiment in consideration of interference between adjacent sensor coils. Outer diameters of the transmission coil 31 and the reception coil 30 are respectively 53 mm and 46 mm in consideration of an SN ratio and interference between adjacent coils. These are not limited to the present sizes and vary depending on a shape of an inspection object, a necessary SN ratio, and the like.

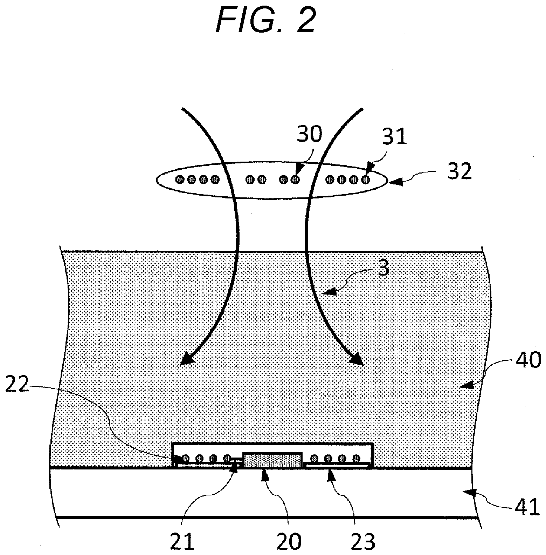

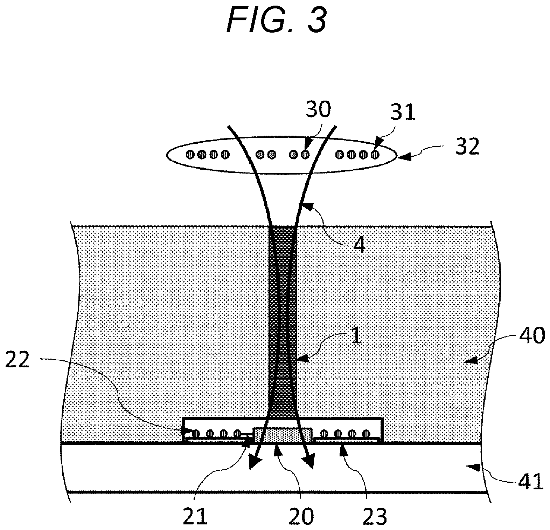

Fig. 2 is a view for describing an operation principal of a sensor system in a technology in a related art, and Fig. 3 is a view for describing an operation principal of the sensor system in the present embodiment.

An electric signal corresponding to a transmission wave generated in a pulsar (not illustrated) is converted into a magnetic field by electromagnetic induction in the transmission coil 31, and transmitted to the sensor coil 22 through magnetic flux 3. The electromagnetic wave blocking sheet 23 is provided between the sensor coil 22 and the inspection object 41 in order to prevent the magnetic field generated in the transmission coil 31 from being lost as an eddy current on the surface of the inspection object 41. A thickness of the electromagnetic wave blocking sheet is 0.2 to 0.5 mm to sufficiently exert a blocking function, but may be thicker. An electric signal received in the sensor coil 22 is transmitted to the sensor 20 through the cable 21.

In the technology in the related art illustrated in Fig. 2, it is experimentally known that it is necessary to use a sensor coil 22 and a transmission coil 31 each of which has an outer diameter that is substantially equal to a distance between the transmission coil 31 and the sensor coil 22 for an arrival of a magnetic field, which is generated in the transmission coil 31, at the sensor coil 22 at sufficient intensity. Thus, in a condition in which a temperature of an inspection object 41 is high and a lagging material 40 is thick, it is necessary to use a coil a size of which is equal to a thickness of the lagging material 40. On the other hand, since an arrangement interval (measurement pitch) of a sensor 20 is prescribed by an inspection method recommended by Japan Society of Mechanical Engineers, it is not possible to unlimitedly increase an outer diameter of the sensor coil 22. In Fig. 2, an example of applying the technology in the related art to an inspection object 41 including a thick lagging material 40 is schematically illustrated. Under the present condition, as it is obvious from the drawing, magnetic flux 3 generated in the transmission coil 31 does not reach the sensor coil 22 and measurement cannot be performed. In order to transmit the magnetic flux 3 to the sensor coil 22 at sufficient intensity, it is necessary to decrease a thickness of the lagging material 40 and to make the transmission coil 31 closer to the sensor coil 22. However, the thickness of the lagging material 40 is prescribed to control heat radiation from a pipe or the like under the lagging material. Thus, it is difficult to reduce the thickness of the lagging material 40.

On the other hand, in the present embodiment, as illustrated in Fig. 3, the magnetic flux convergence structure 1 is included in the lagging material 40. Thus, even in a case where a sensor coil 22 and a transmission coil 31 each of which has an outer diameter smaller than a distance between the transmission coil 31 and the sensor coil 22 are used, magnetic flux 4 generated in the transmission coil 31 passes through the magnetic flux convergence structure 1 and reaches the sensor coil 22. Thus, it becomes possible to perform measurement without reducing a thickness of the lagging material 40. Also, since the magnetic flux convergence structure 1 is formed of a material with relatively low thermal conductivity, it is possible to control an increase in an amount of heat radiation associated with additional provision of a magnetic flux convergence structure 1. In order to acquire such an effect, it is necessary that the material of the magnetic flux convergence structure 1 at least has magnetic permeability of 1 × 10⁻⁴ H/m or higher. A piezoelectric element is used as the sensor 20 to generate an ultrasonic wave. A size of the piezoelectric element is determined according to a frequency of a used ultrasonic wave, an outer diameter thereof being 10 mm and a thickness thereof being 0.6 mm in the present embodiment. The sensor 20 is a piezoelectric element in order to generate an ultrasonic wave in the present embodiment. However, the sensor 20 may include a distortion meter, an electromagnetic sensor, an acceleration meter, a thermal sensor, or the like. Since the sensor 20 is electrically connected to the sensor coil 22 through the cable 21, the sensor 20 vibrates according to an electric signal received in the sensor coil 22, and an ultrasonic wave is transmitted to the inside of the inspection object 41.

An ultrasonic wave reflected on a crack or a bottom surface of the inspection object 41 and received in the sensor 20 makes the sensor 20 generate an electric signal by a piezoelectric effect. The present electric signal is received in the reception coil 30 through the magnetic flux 4 from the sensor coil 22, and is displayed on an oscilloscope on a PC through a receiver. An inspector can determine existence/non-existence of a crack, an amount of thinning, and the like in the inspection object 41 from a displayed waveform. Thus, according to the present embodiment, it is possible to perform an ultrasonic inspection of the inspection object 41 without a removal of the lagging material 40.

Also, in a case where the inspection object 41 is placed at a height, it is possible to perform an ultrasonic inspection without scaffolding assembling by attaching a long bar for a height inspection to the sensor prove 32. Since the sensor 20 is previously pasted on an inspection object, it is not necessary to carefully control an ultrasonic probe at each inspection point and it is possible to reduce inspection time. As described above, since energy is supplied from the sensor prove 32 to the sensor 20 through the magnetic field in a contactless manner, an energy source such as a battery is not necessary in a sensor unit, and the sensor unit becomes compact and maintenance-free.

Since the sensor 20 pasted on the inspection object 41, the sensor coil 22, and the magnetic flux convergence structure 1 attached to the lagging material 40 are not necessarily connected mechanically, it is possible to remove the lagging material without cutting a sensor cable in a case where a crack or thinning is detected by the present sensor, the lagging material is removed, and transition to a manual detailed inspection is performed.

By using the magnetic flux convergence structure 1, it is possible to use a sensor coil 22 having a small outer diameter. Thus, even in a case where a measurement pitch is narrow such as a case of a pipe thinning inspection, it is possible to perform an ultrasonic inspection without receiving a signal from an adjacent sensor coil.

In the method described in British Patent No. 2523266, a position of a sensor coil cannot be visually recognized since an inspection object is covered with a lagging material after a sensor and a sensor coil are provided on a surface of the inspection object. Thus, there is a problem that it becomes difficult to align positions of a sensor prove and a sensor coil during inspection. On the other hand, in the present sensor system, since a magnetic flux convergence structure protruded to a lagging material outer surface is at a position of a sensor coil, it is possible to easily align positions of a sensor prove and a sensor coil.

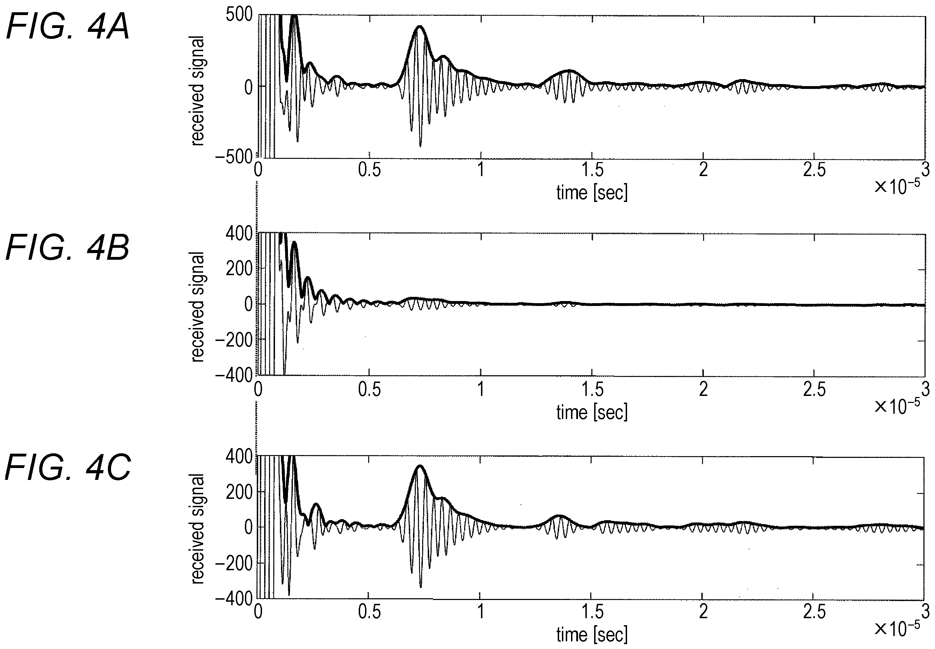

In Figs. 4A to 4C, a received waveform (bottom surface echo) acquired by a publicly known technology disclosed in Cheng Huan Zhon, et al. "Investigation of Inductively Coupled Ultrasonic Transducer System for NDE," IEEE transactions on ultrasonics, Vol. 60, No. 6, p. 1115-1125 (method of performing contactless ultrasonic inspection by using electromagnetic induction between coil) and a received waveform acquired by the present embodiment are compared. A coil size is what is described above and a distance between a sensor prove 32 and a sensor coil 22 (described as contactless measurement distance in drawing) is 15 mm or 40 mm.

As it is understood from Figs. 4A and 4B, a signal is received at sufficient intensity in a case where a contactless measurement distance is short with respect to a coil outer diameter (Fig. 4A), but signal intensity is decreased in a case where the contactless measurement distance becomes long (Fig. 4B). On the other hand, in measurement by the present embodiment, it is understood that a signal is received at sufficient intensity even in a case where a contactless measurement distance is long with respect to a coil outer diameter.

According to the present embodiment, magnetic flux generated in a transmission coil is transmitted to a sensor coil through a magnetic flux convergence structure arranged in a lagging material. Thus, even on an inspection object including a lagging material having a thickness equal to or thicker than a coil outer diameter, an ultrasonic inspection can be performed without a removal of the lagging material. Also, a sensor prove and a sensor coil are connected through an electromagnetic induction phenomenon and there is no mechanical connection part. Thus, with attachment of a log bar for a height inspection to the sensor prove, it is possible to perform an ultrasonic inspection without scaffolding assembling even in a case where an inspection object is at a height. Also, since energy is supplied from a sensor prove to a sensor through electromagnetic induction, it is not necessary to include a battery in a sensor unit, and the sensor unit can be compact and maintenance-free. Also, since a sensor coil and a magnetic flux convergence structure can be arranged in the vicinity, it is possible to control interference from an adjacent sensor coil.

### Second Embodiment

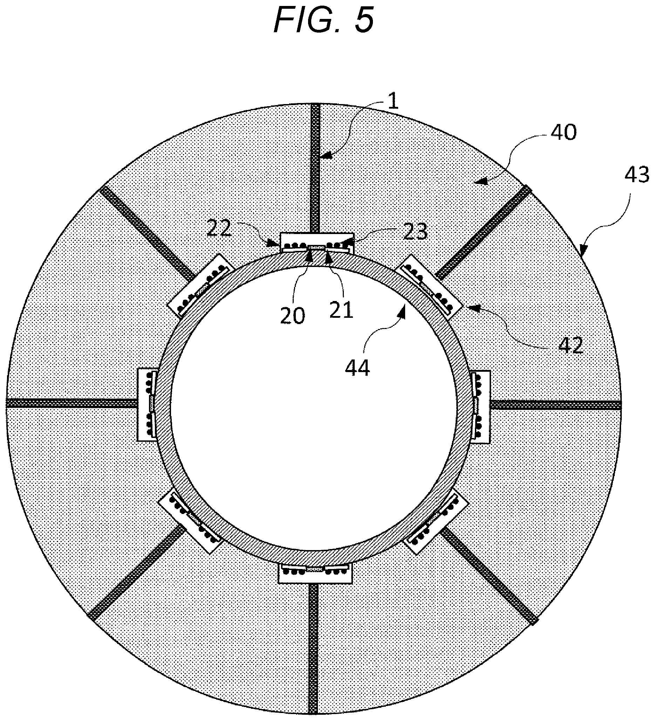

Fig. 5 is a view illustrating a configuration of a sensor system according to the second embodiment.

In a nuclear plant or a thermal power plant, a configuration material of a pipe may be worn by fluid (such as water or steam) flowing in the pipe and thinning may be generated. In Japan Society of Mechanical Engineers, a recommended pipe thinning inspection method is determined, and this requires that a measurement pitch is 100 mm or narrower. Such an object is assumed in the present embodiment.

A sensor system in the present embodiment includes a sensor 20 pasted on a surface of a pipe to be inspected 44, a sensor coil 22 that is electrically connected to the sensor, a sensor prove including a transmission coil and a reception coil (not illustrated), and a magnetic flux convergence structure 1 provided in a lagging material 40 that covers the inspection object.

Since becoming hot during plant operation, the pipe to be inspected 44 is covered with the lagging material 40 formed of calcium silicate (or rock wool, glass wool, amorphous substance kneaded with water, or rigid urethane foam). The magnetic flux convergence structure 1 is arranged in such a manner as to penetrate a lagging material inner surface 42 and a lagging material outer surface 43, and a configuration thereof is similar to that described in the first embodiment.

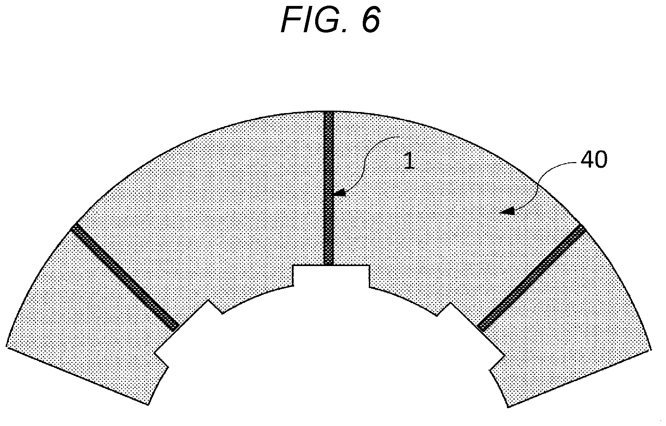

Fig. 6 is a view illustrating a method of embedding the sensor system according to the second embodiment into a lagging material. As described above, the magnetic flux convergence structure 1 is provided in the lagging material 40, and is not necessarily connected to the sensor 20 and the sensor coil 22 on the pipe to be inspected 44 mechanically. Thus, as illustrated in Fig. 6, the lagging material 40 and the magnetic flux convergence structure 1 can be produced as an integral structure. With this arrangement, it becomes not necessary to embed the magnetic flux convergence structure 1 into the lagging material in an actual place, and productivity is improved. In a pipe thinning inspection, it is necessary to remove a lagging material and to perform transition to a detailed measurement, in which measurement is performed at a narrower measurement pitch, in a position where a sign of thinning is seen. Even in such a case, as illustrated in Fig. 6, it is possible to remove the lagging material 40 only in a necessary position in the present embodiment. The other effects according to the present embodiment are as described in the first embodiment.

### Third Embodiment

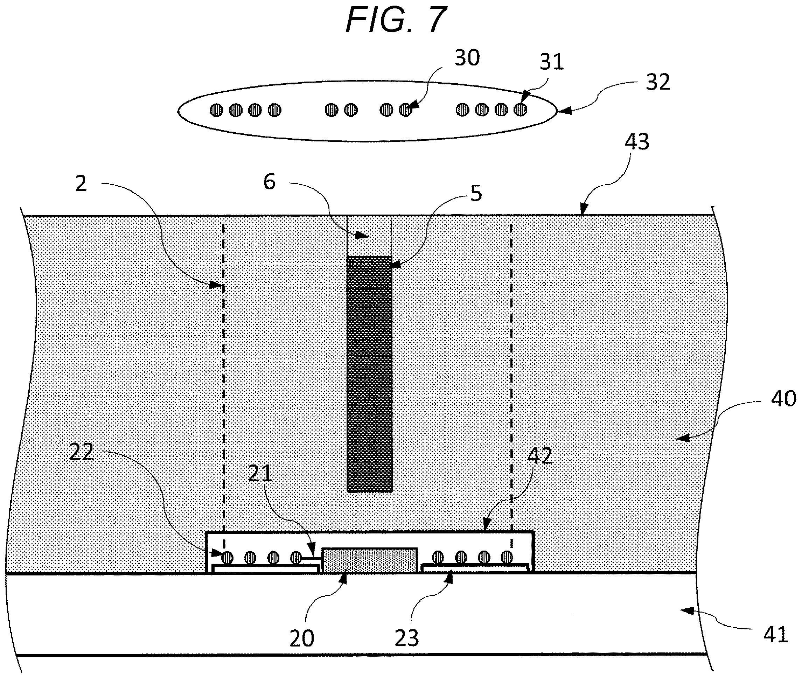

Fig. 7 is a view illustrating a configuration of a sensor system according to the third embodiment. In a case where a plant pipe, container, or the like that is an inspection object of the present sensor system becomes hot, since a magnetic flux convergence structure 1 penetrates a lagging material 40 in the method described in the first embodiment, there is a possibility that heat radiation through the magnetic flux convergence structure 1 cannot be ignored. Such a hot inspection object is assumed in the present embodiment.

A sensor system of the present embodiment includes a sensor 20 pasted on a surface of an inspection object 41, a sensor coil 22 that is electrically connected to the sensor 20 through a cable 21, an electromagnetic wave blocking sheet 23 arranged between the sensor coil 22 and the inspection object 41, a sensor prove 32 including a transmission coil 31 and a reception coil 30, and a magnetic flux convergence structure 5 arranged in a lagging material 40 that covers the inspection object 41.

The magnetic flux convergence structure 5 in the present embodiment does not penetrate the lagging material 40 and is embedded in the lagging material 40. In the embedding, an embedding opening 6 is provided in a lagging material outer surface 43 and the magnetic flux convergence structure 5 is embedded therefrom into the lagging material 40. A material and a shape of the magnetic flux convergence structure 5 are as described in the first embodiment. Each of a distance from an upper end part of the magnetic flux convergence structure 5 to the lagging material outer surface 43, and a distance from a lower end part of the magnetic flux convergence structure 5 to a lagging material inner surface 42 is at least a value equal to or smaller than a diameter of the magnetic flux convergence structure 5 in order to sufficiently acquire an effect of converging magnetic flux from the transmission coil 31. Also, a part of the magnetic flux convergence structure 5 is arranged in such a manner as to be included in a region in a vertical direction 2 of the sensor coil 22 arranged on the inspection object 41.

Magnitude of heat flux that becomes a cause of heat radiation from the inspection object 41 is determined depending on a thickness of the lagging material 40 of a transmission path. Thus, with such a configuration, it is possible to acquire an effect of converging the magnetic flux from the transmission coil 31 while controlling heat radiation from the hot inspection object 41. The other effects according to the present embodiment are as described in the first embodiment.

### Fourth Embodiment

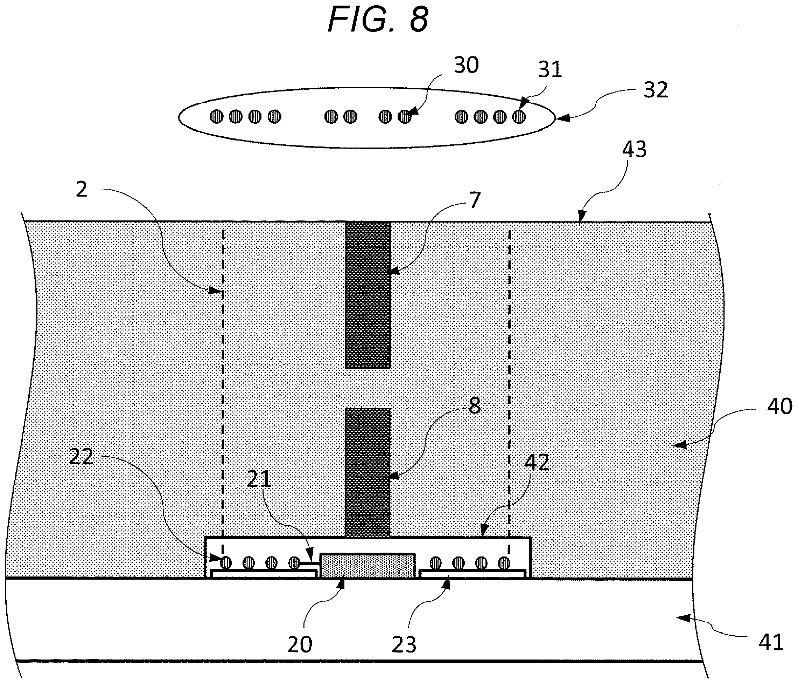

Fig. 8 is a view illustrating a configuration of a sensor system according to the fourth embodiment.

In a case where a plant pipe, container, or the like that is an inspection object of the present sensor system becomes hot, since a magnetic flux convergence structure 1 penetrates a lagging material 40 in the method described in the first embodiment, there is a possibility that heat radiation through the magnetic flux convergence structure 1 cannot be ignored. Such a hot inspection object is assumed in the present embodiment.

A sensor system of the present embodiment includes a sensor 20 pasted on a surface of an inspection object 41, a sensor coil 22 that is electrically connected to the sensor 20 through a cable 21, an electromagnetic wave blocking sheet 23 arranged between the sensor coil 22 and the inspection object 41, a sensor prove 32 including a transmission coil 31 and a reception coil 30, and a lagging material outer surface-side magnetic flux convergence structure 7 and a lagging material inner surface-side magnetic flux convergence structure 8 that are arranged in a lagging material 40 covering the inspection object 41.

In the method of the third embodiment, since a magnetic flux convergence structure is embedded in a lagging material, there is a problem that alignment of positions of a sensor prove and a sensor coil during inspection becomes difficult. In the present embodiment, since the lagging material outer surface-side magnetic flux convergence structure 7 and the lagging material inner surface-side magnetic flux convergence structure 8 are used, it becomes possible to easily align a sensor prove and a sensor coil during inspection while controlling heat radiation from a hot inspection object 41.

A distance between facing ends of the lagging material outer surface-side magnetic flux convergence structure 7 and the lagging material inner surface-side magnetic flux convergence structure 8 is at least a value equal to or smaller than a diameter of each of the magnetic flux convergence structures in order to sufficiently acquire an effect of magnetic flux convergence. A material, a shape, and the like of the lagging material outer surface-side magnetic flux convergence structure 7 and the lagging material inner surface-side magnetic flux convergence structure 8 are as described in the first embodiment.

Magnitude of heat flux that becomes a cause of heat radiation from the inspection object 41 is determined depending on a thickness of the lagging material 40 of a transmission path. Thus, with such a configuration, it is possible to acquire an effect of converging magnetic flux from the transmission coil 31 while controlling heat radiation from the hot inspection object 41. The other effects according to the present embodiment are as described in the first embodiment.

### Fifth embodiment

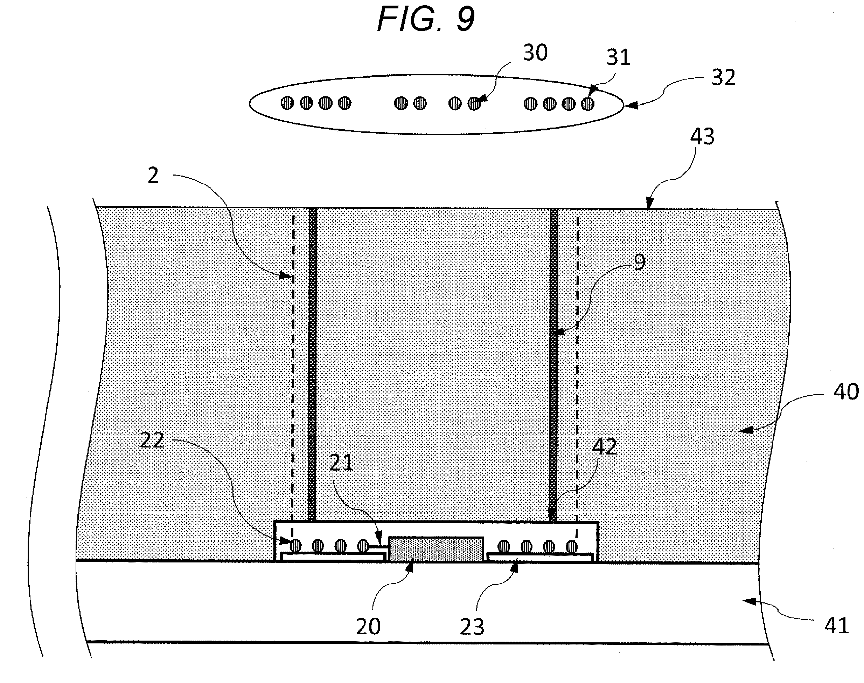

Fig. 9 is a view illustrating a configuration of a sensor system according to the fifth embodiment.

In a case of being additionally provided, the present sensor system is preferably provided without a change in an already provided lagging structure. Specifically, since a material (such as ferrite that is material with high magnetic permeability and low thermal conductivity) included in a magnetic flux convergence structure has high density compared to a configuration material of a lagging material, it is important to reduce an amount of the magnetic flux convergence structure and to control a weight increase. Such an inspection object is assumed in the present embodiment.

A sensor system of the present embodiment includes a sensor 20 pasted on a surface of an inspection object 41, a sensor coil 22 that is electrically connected to the sensor 20 through a cable 21, an electromagnetic wave blocking sheet 23 arranged between the sensor coil and the inspection object 41, a sensor prove 32 including a transmission coil 31 and a reception coil 30, and a hollow tubular magnetic flux convergence structure 9 arranged in a lagging material 40 that covers the inspection object 41.

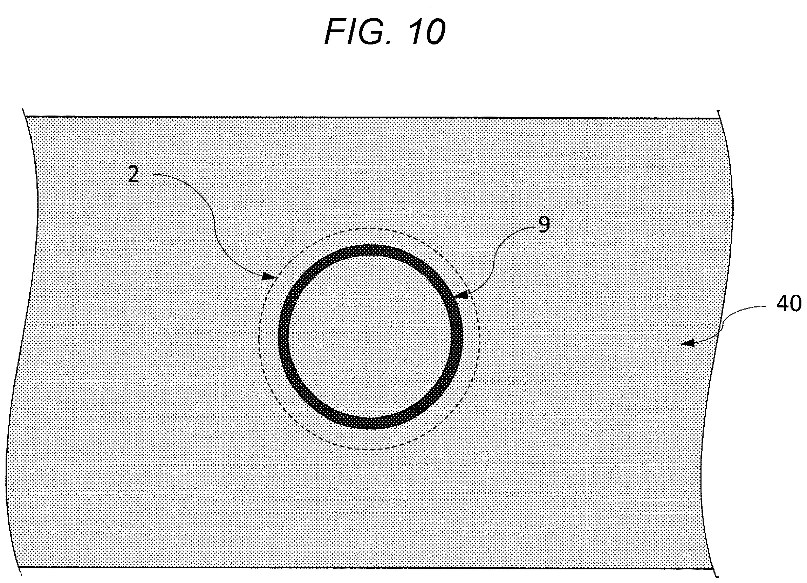

As illustrated in Fig. 2, it is important to change a direction of magnetic flux in an outer peripheral part of the sensor coil 22 in order to control leakage of magnetic flux from the transmission coil 31. Thus, in the present embodiment, the hollow tubular magnetic flux convergence structure 9 along the outer peripheral part of the sensor coil 22 is arranged inside the lagging material 40. Thus, while an amount of the magnetic flux convergence structure 9 is controlled, magnetic flux from the transmission coil 31 is converged. In Fig. 10, the sensor system in the present embodiment is illustrated from a side of the sensor prove. An inner side of the hollow tubular magnetic flux convergence structure 9 is filled with a material that is the same with that of the lagging material 40. In order to acquire a magnetic flux convergence effect, an outer diameter of the hollow tubular magnetic flux convergence structure 9 is at least a value equal to or smaller than an outer diameter of the sensor coil 22.

With such a configuration, it is possible to acquire an effect of converging the magnetic flux from the transmission coil 31 while controlling a weight increase associated with additional provision of a magnetic flux convergence structure. The other effects according to the present embodiment are as described in the first embodiment.

Note that the present invention is not limited to the above embodiments and various modified examples are included. For example, the above embodiments are described in detail to describe the present invention in an easily understandable manner. The present invention is not necessarily limited to what includes all of the above-described configurations. Also, it is possible to replace a part of a configuration of a certain embodiment with a configuration of a different embodiment and to add a configuration of a different embodiment to a configuration of a certain embodiment. Also, with respect to a part of a configuration of each embodiment, a different configuration can be added, deleted, or replaced.

## Claims

1. A sensor system comprising:
a lagging material (40) that covers a periphery of a structure that becomes hot (41);
a sensor (20) configured to be arranged on a surface of the structure (41);
a sensor coil (22) electrically connected to said sensor; and
a member (1) that converges a magnetic field line in the lagging material (40), wherein:
the member (1) includes a magnetic body,
the magnetic body of the member (1) has magnetic permeability of 1 × 10₋₄ H/m or higher, and wherein
the member (1) is arranged within the lagging material and is included in a region extending in a thickness direction of the lagging material (2) from the sensor coil (22), said lagging material (40) comprising a notch part (10) that is a space in which the sensor (20) and the sensor coil(22) are arrangeable.

2. The sensor system according to claim 1, wherein the magnetic body has a bar shape penetrating an inner surface to an outer surface of the lagging material (40).

3. The sensor system according to claim 1,
wherein the magnetic body has a bar shape embedded inside the lagging material (40).

4. The sensor system according to claim 1,
wherein the magnetic body has a bar shape divided to an inner-surface side magnetic flux convergence structure and an outer-surface side magnetic flux convergence structure, and the inner-surface side magnetic flux convergence structure and the outer-surface side magnetic flux convergence structure are arranged on a same axis.

5. The sensor system according to claim 1,
wherein the magnetic body has a hollow tubular shape.

## Patentansprüche

1. Sensorsystem, umfassend:
ein Wärmedämmmaterial (40), das einen Umfang einer Struktur abdeckt, die heiß (41) wird;
einen Sensor (20), der ausgelegt ist, um auf einer Oberfläche der Struktur (41) angeordnet zu sein;
eine Sensorspule (22), die elektrisch mit dem Sensor verbunden ist; und
ein Element (1), das eine Magnetfeldlinie in dem Wärmedämmmaterial (40) konvergiert, wobei:
das Element (1) einen Magnetkörper umfasst,
wobei der Magnetkörper des Elements (1) eine magnetische Permeabilität von 1 × 10⁻⁴ H/m oder mehr aufweist und wobei
das Element (1) innerhalb des Wärmedämmmaterials angeordnet ist und in einem Bereich beinhaltet ist, der sich in eine Dickenrichtung des Isolationsmaterials (2) von der Sensorspule (22) erstreckt, wobei das Wärmedämmmaterial (40) einen Aussparungsteil (10) umfasst, der ein Raum ist, in dem der Sensor (20) und die Sensorspule (22) anordenbar sind.

2. Sensorsystem nach Anspruch 1, wobei der Magnetkörper eine Stangenform aufweist, die eine Innenfläche bis zu einer Außenfläche des Wärmedämmmaterials (40) durchdringt.

3. Sensorsystem nach Anspruch 1,
wobei der Magnetkörper eine Stangenform aufweist, die innerhalb des Wärmedämmmaterials (40) eingebettet ist.

4. Sensorsystem nach Anspruch 1,
wobei der Magnetkörper eine Stangenform aufweist, die in eine innenflächenseitige Magnetfluss-Konvergenzstruktur und eine außenflächenseitige Magnetfluss-Konvergenzstruktur unterteilt ist, und wobei die innenflächenseitige Magnetfluss-Konvergenzstruktur und die außenflächenseitige Magnetfluss-Konvergenzstruktur auf derselben Achse angeordnet sind.

5. Sensorsystem nach Anspruch 1, wobei der Magnetkörper eine Hohlrohrform aufweist.

## Revendications

1. Système de capteur, comprenant :
un matériau calorifuge (40) qui recouvre une périphérie d'une structure qui devient chaude (41) ;
un capteur (20) configuré pour être agencé sur une surface de la structure (41) ;
une bobine de capteur (22) connectée électriquement audit capteur ; et
un élément (1) qui fait converger une ligne de champ magnétique dans le matériau calorifuge (40), dans lequel :
l'élément (1) inclut un corps magnétique,
le corps magnétique de l'élément (1) présente une perméabilité magnétique de 1 × 10₋₄ H/m ou plus, et dans lequel
l'élément (1) est agencé à l'intérieur du matériau calorifuge et est inclus dans une région s'étendant dans une direction d'épaisseur du matériau calorifuge (2) à partir de la bobine de capteur (22), ledit matériau de calorifuge (40) comprenant une partie d'encoche (10) qui est un espace dans lequel le capteur (20) et la bobine de capteur (22) peuvent être agencés.

2. Système de capteur selon la revendication 1,
dans lequel le corps magnétique présente une forme de barre pénétrant une surface intérieure vers une surface extérieure du matériau calorifuge (40).

3. Système de capteur selon la revendication 1,
dans lequel le corps magnétique présente une forme de barre incorporée à l'intérieur du matériau calorifuge (40).

4. Système de capteur selon la revendication 1,
dans lequel le corps magnétique présente une forme de barre divisée en une structure de convergence de flux magnétique côté surface intérieure et une structure de convergence de flux magnétique côté surface extérieure, et la structure de convergence de flux magnétique côté surface intérieure et la structure de convergence de flux magnétique côté surface extérieure sont agencées sur un même axe.

5. Système de capteur selon la revendication 1,
dans lequel le corps magnétique présente une forme tubulaire creuse.
